# Europäisches Patentamt
# European Patent Office
# Office européen des brevets

(19)

(11) Numéro de publication: **0 123 581**
**B1**

(12)

# FASCICULE DE BREVET EUROPÉEN

(45) Date de publication du fascicule du brevet:
02.09.87

(51) Int. Cl.⁴: **G 01 F 13/00,** B 05 B 7/14

(21) Numéro de dépôt: **84400573.6**

(22) Date de dépôt: **21.03.84**

(54) Distributeur de poudre, notamment pour pistolet de projection à chaud.

(30) Priorité: **28.03.83 FR 8305061**

(43) Date de publication de la demande:
**31.10.84 Bulletin 84/44**

(45) Mention de la délivrance du brevet:
**02.09.87 Bulletin 87/36**

(84) Etats contractants désignés:
**BE CH DE FR GB IT LI**

(56) Documents cité:
**BE-A-545 194**
**FR-A-1 045 562**
**FR-A-2 159 182**
**US-A-3 065 032**

**IBM TECHNICAL DISCLOSURE BULLETIN, vol. 12,
no. 8, janvier 1970, page 1153, New York, US; H.H.
MANNER et al.: "Grit feeder"**

(73) Titulaire: **SOCIETE DE FABRICATION
D'ELEMENTS CATALYTIQUES S.F.E.C., Site
Industriel de Saint- Pierre- de- Sénos, F-84500
Bollène (FR)**

(72) Inventeur: **Gastaldi, Sébastien, 3, Avenue Pierre
de Coubertin, F-26700 Pierrelatte (FR)**
Inventeur: **Martin, Henri, 26, rue Paul Marieton,
F-84100 Orange (FR)**
Inventeur: **Boufflet, Philippe, 3, rue du Fond du
Sac, F-26130 Saint- Paul- Trois- Chateaux (FR)**

(74) Mandataire: **Mongrédien, André, c/o BREVATOME
25, rue de Ponthieu, F-75008 Paris (FR)**

## Description

La présente inventiom concerne un distributeur de poudre destiné à doser une poudre avec une grande précision, puis à transporter cette poudre jusqu'à un appareil d'utilisation quelconque tel qu'un pistolet de projection à chaud.

Les pistolets de projection à chaud auxquels l'invention peut s'appliquer avantageusement sont notamment les chalumeaux à flamme chimique et les pistolets à chalumeau plasma par arc soufflé, en atmosphère libre ou en atmosphère contrôlée. Toutefois, l'invention n'est pas limitée à ces applications et peut être utilisée dans tous les cas où il est nécessaire de doser et de transporter une poudre en vrac avec une grande précision vers un appareil quelconque.

D'une façon générale, les distributeurs de poudre doivent remplir les deux fonctions essentielles que sont le dosage de la poudre et son transport jusqu'à l'appareil d'utilisation.

Afin d'effectuer le dosage de la poudre, on doit tenir compte autant que possible, d'une part, de la nécessité de pouvoir alimenter l'appareil d'utilisation de la poudre avec des poudres de caractéristiques très différents et, d'autre part, de la nécessité de disposer d'un distributeur de poudre assurant une alimentation en poudre de l'appareil d'utilisation reproductible dans le temps. Parmi les caractéristiques de la poudre qui doivent pouvoir être modifiées, on peut noter la nature de la poudre (métallique, organique, céramique, cermet, oxyde, etc...) sa densité (qui varie, par exemple de 1 à 7), sa granulométrie (qui varie, par exemple, entre 2 et 200 µm) ainsi que la forme des grains.

Dans l'etat actuel de la technique, aucun distributeur de poudre ne permet de réaliser le dosage de la poudre en répondant de façon totalement satisfaisante à ces deux exigences.

Ainsi, il existe des distributeurs de poudre, tels que celui qui est décrit dans le brevet français n° 2 048 781, dans lesquels le dosage de la poudre est réalisé par des moyens entièrement fluidiques. Si de tels dispositifs peuvent en général être utilisés pour des poudres présentant des caractéristiques très variables, ils ne sont pas satisfaisants du point de vue de la reproductibilité dans le temps des résultats obtenus.

Un autre exemple de distributeur de poudre à dosage fluidique est donné par le document FR-A- 2 159 182. Le distributeur décrit dans ce document comporte un réservoir de poudre à l'air libre, qui communique avec une enceinte étanche par un mécanisme à vis sans fin contrôlé par un capteur sensible au niveau de poudre dans l'enceinte. Le dosage est effectué en injectant de l'air sous une plaque de fluidification sur laquelle repose la poudre à l'intérieur de l'enceinte. Le transfert de la poudre est effectué en injectant de l'air sous pression.

A l'inverse, on connait notamment du brevet allemand n° 2 807 866 des distributeurs de poudre mettant en oeuvre des moyens de dosage entièrement mécaniques. Toutefois, ces distributeurs s'adaptent mal aux changements de caractéristiques de la poudre souhaités généralement par l'utilisateur. De plus, les mécanismes de dosage existant actuellement ne permettent pas d'éviter la formation d'amas de poudre et, en conséquence la création de voûtes arrêtant l'avance du produit. De plus, ils ne permettent pas de réguler de façon aussi parfaite que souhaitable le dosage de la poudre, ni d'empêcher une éventuelle ségrégation de granulométrie.

On connait aussi du document IBM Technical Disclosure Bulletin, volume 12, numéro 8, (1970), page 1153, un distributeur de poudre contenant une trémie déversant la poudre sur le fond bombé d'un bol vibrant, l'ensemble étant logé dans un récipient pressurisé. Dans ce document, le dosage de la poudre est effectué par une vanne située dans un conduit de transport de la poudre vers un appareil d'utilisation.

Par ailleurs, les distributeurs de poudre existants utilisent pratiquement tous les moyens de transport de la poudre jusqu'à l'appareil d'utilisation par gaz porteur.

La présente invention a précisément pour objet un distributeur de poudre mettant à profit à la fois les avantages présentés par les appareils à dosage mécanique et les avantages présentés par les appareils à dosage fluidique, tout en en supprimant les inconvénients.

A cet effet et conformément à l'invention, il est proposé un distributeur de poudre comprenant au moins un réservoir de stockage de la poudre à distribuer, une enceinte étanche contenant des moyens de dosage de la poudre, des moyens de transfert mécanique de la poudre du réservoir dans l'enceinte étanche, au moins un capteur de niveau de poudre dans cette enceinte, délivrant des signaux contrôlant l'actionnement des moyens de transfert mécanique, et des moyens de transport de la poudre par gaz porteur, comportant des moyens pour introduire un gaz porteur sous pression dans l'enceinte étanche et un conduit de transport de la poudre dosée vers un appareil d'utilisation, ce distributeur étant caractérisé en ce que le réservoir de stockage est étanche, les moyens de dosage comprenant un bol vibrant disposé dans l'enceinte étanche et présentant un orifice de sortie communiquant avec le conduit de transport, les moyens de transport de la poudre comprenant de plus des moyens pour introduire le gaz porteur sous pression dans le réservoir, et un accélérateur en équi-pression disposé dans le conduit de transport, cet accélérateur comportant une zone convergente suivie d'une zone divergente, ces deux zones étant séparées par un passage annulaire communiquant avec l'intérieur de l'enceinte étanche et dont la section diminue radialement vers l'intérieur.

Selon une première variante de réalisation de l'invention, le réservoir de stockage comporte à son extrémité inférieure une trémie conique disposée au-dessus du bol vibrant, les moyens de transfert mécanique de la poudre comprenant une vis d'Archimède disposée selon une génératrice de la trémie conique dans le fond de cette dernière et dans un passage débouchant au-dessus du bol vibrant.

Selon une deuxième variante de réalisation de l'invention, le réservoir de stockage comporte à son extrémité inférieure une trémie conique disposée au-dessus du bol vibrant, les moyens de transfert mécanique de la poudre comprenant un clapet disposé dans un passage communiquant avec le fond de la trémie et débouchant au-dessus du bol vibrant, et une pièce mobile disposée dans le fond de la trémie selon une génératrice de celle-ci.

L'accélérateur en équi-pression comprend, de préférence, au moins deux pièces entre lesquelles est formé le passage annulaire et portant chacune l'une desdites zones convergente et divergente, et des moyens pour déplacer ces pièces l'une par rapport à l'autre selon l'axe du conduit, afin de régler la largeur dudit passage annulaire.

Selon une autre caractéristique de l'invention, le bol vibrant comprend un fond dont la profondeur augmente du centre vers la périphérie et une rainure en spirale reliant le fond du bol à l'orifice de sortie, de telle sorte que son extrémité interne se trouve au niveau de la périphérie du fond du bol et qu'elle s'élève régulièrement jusqu'à l'orifice de sortie.

De préférence, le bol vibrant est actionné par un générateur de vibrations disposé en-dessous du bol et reposant sur le fond de l'enceinte étanche, des moyens étant prévus pour régler le régime dudit générateur. Afin de contrôler le dosage de poudre réalisée par le bol vibrant, celui-ci porte alors un accéléromètre délivrant des signaux représentatifs du poids de poudre débitée par le bol vibrant, ces signaux servant à agir sur lesdits moyens de réglage du régime du générateur de vibrations.

Selon une autre caractéristique de l'invention, un soufflet perméable aux gaz et imperméable aux poudres relie la périphérie du bol vibrant aux parois de l'enceinte étanche, afin d'éviter que les poudres ne parviennent accidentellement jusqu'au générateur de vibrations.

Selon un mode de réalisation particulier de l'invention, le distributeur comprend deux capteurs de niveau capacitifs définissant les niveaux minimum et maximum de poudre dans le bol vibrant, et des moyens de commutation commandant la mise en oeuvre des moyens de transfert mécanique lors ue le niveau de poudre dans le bol vibrant est compris entre lesdits niveaux minimum et maximum, et leur arrêt dans le cas contraire. De préférence, les niveaux minimum et maximum définis par les capteurs sont alors réglables.

Selon encore une autre caractéristique de l'invention, les moyens pour introduire un gaz porteur dans le réservoir et dans l'enceinte étanche comprennent des moyens pour introduire le gaz porteur dans l'enceinte étanche et au moins un tube reliant cette derière à l'extrémité supérieure du réservoir de stockage. De plus, ces moyens permettent de préférence d'introduire le gaz à un débit constant réglable.

Dans certaines applications, des moyens de préchauffage de la poudre peuvent être prévus dans le réservoir de stockage.

Enfin, des moyens de mesure de la pression régnant dans l'enceinte étanche peuvent être prévus, notamment afin de détecter l'éventuelle obstruction de l'accélérateur en équi-pression.

On décrira maintenant, à titre d'exemple non limitatif, deux variantes de réalisation de la présente invention en se référant aux dessins annexés dans lesquels:
- la figure 1 est une vue en coupe transversale schématique du distributeur de poudre selon l'invention,
- la figure 2 est une vue en coupe à plus grande échelle d'un accélérateur en équi-pression utilisé dans le distributeur de la figure 1, et
- la figure 3 est une vue en coupe représentant à plus grande échelle une variante de réalisation des moyens de transfert de la poudre depuis le réservoir de stockage jusqu'au bol vibrant, dans le distributeur de poudre représenté sur la figure 1.

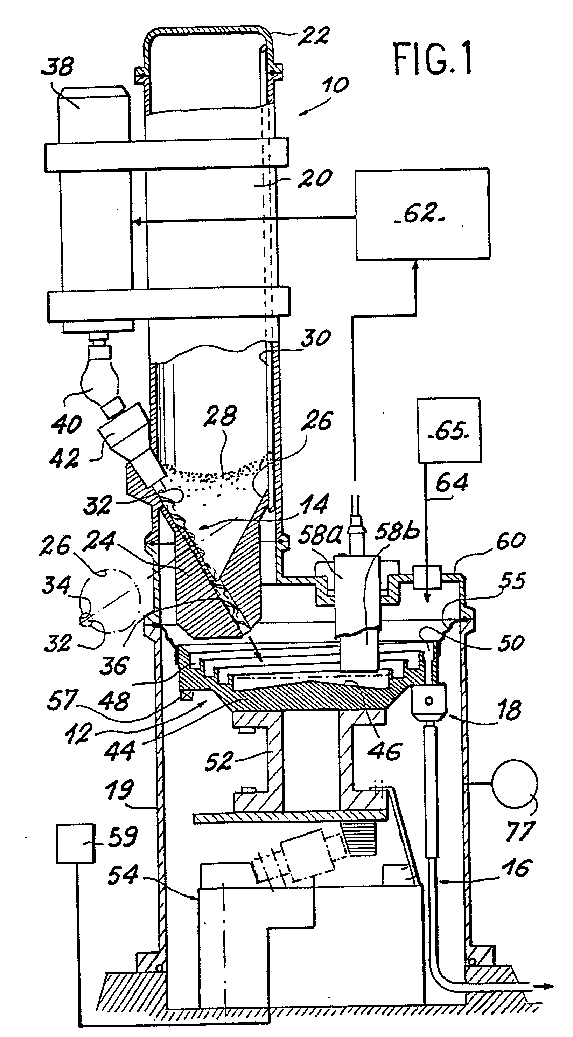

Comme l'illustre la figure 1, le distributeur de poudre selon l'invention comprend principalement un réservoir de stockage étanche 10, un bol vibrant 12 assurant le dosage de la poudre, des moyens de transfert mécanique 14 de la poudre depuis le réservoir 10 jusqu'au bol vibrant 12 et un conduit de transport 16 dont l'entrée est munie d'un accélérateur en équi-pression 18. Ce conduit 16 sert à transporter la poudre depuis le bol vibrant 12 jusqu'à l'appareil d'utilisation (non représenté), sous l'effet de la pressurisation d'une enceinte étanche 19 contenant le bol vibrant 12 et une partie du conduit 16.

De façon plus précise, le réservoir de stockage 10 se compose d'une virole cylindrique 20, d'axe vertical obturée de façon étanche à son extrémité supérieure par un couvercle démontable 22. La virole 20 se prolonge à son extrémité inférieure pour former le fond 24 du réservoir, dont la paroi interne 26 définit une trémie conique facilitant l'écoulement de la poudre 28 contenue dans le réservoir.

A titre d'exemple, la capacité du réservoir 10 peut varier de 1,5 à 3 litres selon les besoins.

La poudre 28 contenue dans le réservoir est pressurisée par le gaz porteur servant par ailleurs au transport de la poudre jusqu'à l'appareil d'utilisation par le conduit 16. Cette pressurisation du réservoir 10 facilite le transfert de la poudre dans le bol vibrant 12. Elle est réalisée au moyen d'au moins un tube vertical 30 reliant le volume interne de l'enceinte étanche 19, dans laquelle est injecté le gaz porteur, à l'extrémité supérieure du réservoir 10. Comme l'illustre la figure 1, ce tube 30 est disposé de préférence à l'intérieur de la virole 20.

Dans le mode de réalisation de la figure 1, les moyens de transfert 14 de la poudre 28 depuis le réservoir 10 jusqu'au bol vibrant 12 comprennent une vis d'Archimède 32 traversant le fond 24 du bol selon une génératrice de la trémie conique 26. De façon plus précise, une partie de la vis 32 est disposée dans une gorge 34 semi-circulaire s'étendant selon une génératrice de la trémie 26, comme on l'a également représenté en section sur la figure 1. L'extrémité de la vis 32 est située dans un passage 36, de section circulaire, prolongeant la gorge 34 et débouchant au-dessus de la partie centrale du bol vibrant 12.

La rotation de la vis d'Archimède 32 est commandée par un moto-réducteur 38 fixé sur la virole 20 du réservoir, par l'intermédiaire d'un renvoi d'angle 40 et d'un dispositif d'étanchéité 42 situé au niveau de la traversée de la virole 20.

La vis d'Archimède 32 a pour principale fonction de contrôler le transfert de la poudre 28 depuis le réservoir 10 jusqu'au bol vibrant 12. En d'autres termes, la vis 32 contrôle l'alimentation en poudre du bol vibrant et aide ainsi à celui-ci à remplir la fonction de dosage de la poudre de façon satisfaisante.

La vis d'Archimède 32 a aussi pour fonction d'éviter le formation d'amas de poudre dans le fond du réservoir de stockage. A cet effet, on voit sur la section de la figure 1 qu'une partie de la vis est placée hors de la gorge 34. La création de voûtes arrètant l'avance de la poudre se trouve ainsi empêchée.

Comme on vient de le voir, le passage 36 par lequel la vis 32 transfère la poudre dans le bol vibrant 12 débouche au-dessus de la partie centrale de celui-ci. De façon plus précise, le passage 36 débouche au-dessus du fond 44 du bol vibrant. Afin de ramener la poudre vers la périphérie du bol, le fond 44 présente une profondeur qui va en augmentant depuis le centre vers la périphérie et il définit ainsi une surface conique 46.

Le bol vibrant 12 comporte de plus une rainure en spirale 46 qui relie la périphérie du fond 44 à un orifice de sortie 50 en s'élevant régulièrement.

Le bol vibrant 12 est supporté par une entretoise 52 qui repose elle-même sur un générateur de vibrations 54 d'un quelconque type connu. De préférence, le générateur de vibrations 54 est fixé directement sur le fond de l'enceinte étanche 19.

Comme on l'a mentionné précédemment, le bol vibrant 12 a essentiellement pour fonction d'assurer le dosage de la poudre. En d'autres termes, le bol vibrant achemine en continu jusqu'à l'orifice de sortie 50 une quantité de poudre parfaitement dosée selon les besoins de l'appareil d'utilisation raccordé au conduit 16. L'accélérateur en équi-pression 18 assure ensuite dans ce conduit une fonction motrice d'entraînement de la poudre dosée.

Conformément à un perfectionnement particulièrement intéressant du dispositif selon l'invention, le dosage de la poudre réalisé par le bol vibrant 12 est régulé au moyen d'un accéléromètre 57 solidaire du bol vibrant. De préférence, l'accéléromètre 57 est fixé à la périphérie du bol, par exemple en-dessous du fond 44, comme l'illustre la figure 1.

L'accéléromètre 57 délivre à tout instant un signal représentatif de l'énergie appliquée à la poudre par le bol. Pour une poudre donnée, l'énergie dissipée au niveau du bol correspond à un poids bien déterminé de poudre débitée par le bol. Le signal délivré par l'accéléromètre est donc représentatif du poids de poudre débitée et, par conséquent, du débit.

Il est ainsi possible de réguler de façon précise le poids de poudre débitée par le bol, indépendamment des conditions d'environnement et du caractère éventuellement instable de la tension d'alimentation du générateur de vibrations 54.

Cette régulation peut se faire manuellement. L'information fournie par l'accéléromètre est alors exploitée pour agir sur l'alimentation 59 du générateur 54, lorsque le débit s'éloigne trop de la valeur de consigne.

La régulation peut aussi être réalisée de façon automatique à l'aide d'un asservissement sensible aux signaux délivrés par l'accéléromètre pour modifier la tension d'alimentation du générateur de vibrations 54, afin de réguler le débit de poudre. Cet asservissement est réalisé à l'aide de moyens d'asservissement de type connu.

Afin d'empêcher que la poudre ne parvienne jusqu'au générateur de vibrations 52, ce qui risquerait de l'endommager, on prévoit entre la périphérie du bol vibrant 12 et les parois de l'enceinte 19 un soufflet 55 imperméable aux poudres. De préférence, ce soufflet est perméable aux gaz afin de permettre une introduction du gaz porteur par le bas de l'enceinte 19, comme on le verra ultérieurement.

Conformément à une caractéristique importante de l'invention, la mise en oeuvre du motoréducteur 38 actionnant la vis d'Archimède 32 est contrôlée selon le niveau de poudre présent dans le fond du bol vibrant 12.

Dans le mode de réalisation représenté, ce contrôle est du type "tout ou rien". A cet effet, on utilise deux capteurs de niveau 58a et 58b montés de façon étanche sur le couvercle 60 de l'enceinte 19, afin de détecter respectivement un niveau minimum et un niveau maximum de poudre dans le fond du bol vibrant.

De préférence, ces capteurs 58a et 58b permettent de régler la valeur des niveaux minimum et maximum détectés. A cet effet, leur fixation sur le couvercle 60 peut permettre, par exemple, d'en régler le positionnement vertical.

Afin de pouvoir détecter le niveau de la poudre dans le fond du bol quelle que soit la nature de la poudre, les capteurs 58a et 58b sont, de préférence, des capteurs capacitifs. Toutefois, on comprendra que des capteurs de niveaux de tout autre type connu pourraient aussi être utilisés.

Les signaux électriques "tout ou rien" délivrés par les capteurs 58a et 58b sont transmis à un dispositif de commutation 62 servant à mettre sous tension ou, au contraire, à arrêter le moto-réducteur 38, selon que le niveau de la poudre dans le fond du bol vibrant est compris entre les niveaux minimum et maximum déterminés par les capteurs ou, au contraire, situé hors de cette zone.

Dans une variante de réalisation non représentée, le motoréducteur 38 peut être à vitesse variable et asservie au niveau de la poudre dans le fond du bol vibrant. Un capteur de niveau unique donnant une indication quantitative de ce niveau peut alors être utilisé pour contrôler un circuit d'asservisseme commandant la mise en oeuvre du motoréducteur.

Comme on l'a vu précédemment, le transport de la poudre depuis le bol vibrant 12 assurant son dosage jusqu'à l'appareil d'utilisation (non représenté) s'effectue par le conduit 16 prolongeant l'orifice de sortie 50. De plus, l'écoulement du fluide biphasique que constitue la poudre mélangée au gaz porteur est provoqué par la différence de pression existant entre le volume interne à l'enceinte 19 et le point d'injection de la poudre dans l'appareil d'utilisation. Cette différence de pression résulte de la pressurisation du volume interne à l'enceinte étanche 19.

La pressurisation de l'enceinte 19 est obtenue par une injection à débit constant du gaz porteur à l'intérieur de cette enceinte. Dans la variante représentée sur la figure 1, cette injection est réalisée par une conduite 64 traversant le couvercle 60 et disposée sensiblement dans le prolongement de l'orifice de sortie 50. Toutefois, cette disposition n'est pas limitative, et on pourra notamment placer le conduit 64 dans le fond de l'enceinte 19, afin de concentrer tous les organes de commande et de contrôle du dispositif à ce niveau. De préférence, les moyens d'injection 65 du gaz porteur, qui sont en eux-mêmes d'un type connu, permettent de mesurer le débit et de le régler selon l'application souhaitée.

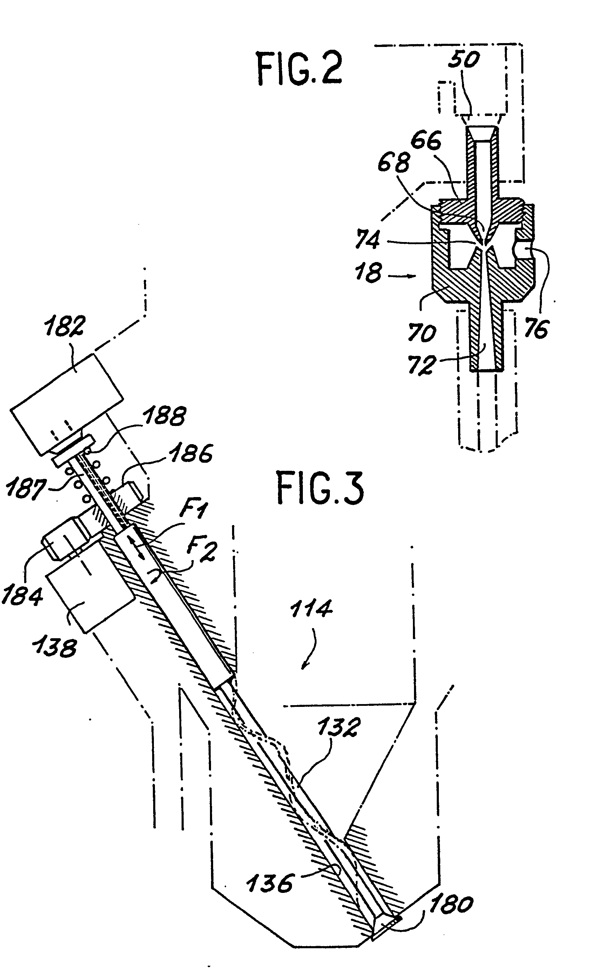

Dans le mode de réalisation représenté sur la figure 1, l'entrée du conduit 16 est munie d'un accélérateur en equi-pression 18 représenté plus en détail sur la figure 2. Cet accélérateur a pour fonction d'homogénéiser le mélange formé par le gaz porteur et par la poudre et d'entraîner cette dernière vers l'appareil d'utilisation.

Comme le montre la figure 2, l'accélérateur 18 comprend une première pièce 66 constituant un injecteur prolongeant verticalement vers le bas l'orifice de sortie 50 du bol vibrant. L'extrémité inférieure de l'injecteur 66 comporte une one convergente 68 débouchant en vis-à-vis d'une zone divergente 72 formée sur une deuxième pièce 70 dans laquelle est vissé l'injecteur 70.

L'accélération du mélange dans l'accélérateur 16 est obtenue à l'aide d'un passage annulaire 74 formé entre les extrémités des pièces 66 et 70 et communiquant avec le volume interne de l'enceinte pressurisée 19 par au moins un passage 76 formé dans la pièce 70. De préférence, la section du passage annulaire 74 va en diminuant de l'extérieur vers l'intérieur et ce passage est orienté généralement vers le bas, c'est-à-dire dans le sens de l'écoulement du fluide biphasique. On voit aussi sur la figure 2 que l'angle de la zone convergente 68 est sensiblement plus grand que l'angle de la zone divergente 72.

On comprend qu'un vissage plus ou moins important de l'injecteur 66 dans la pièce 70 permet de régler la largeur du passage annulaire 74 selon les caractéristiques de la poudre. Un débit de poudre compris entre 100 g et 20 000 g à l'heure peut ainsi être obtenu, selon la vitesse désirée et en fonction de la densité de la poudre.

Comme l'illustre la figure 1, la pression régnant dans l'enceinte 19 peut être surveillée, par exemple à l'aide d'un manomètre 77. Cette surveillance permet, conformément à un autre aspect du dispositif selon l'invention, de détecter une obstruction de l'accélérateur 18 par un corps étranger ou une saturation en poudre de cet accélérateur.

En effet, on observe que la pression régnant dans l'enceinte 19 augmente avec le débit de poudre distribuée. Cela s'explique par le fait que la perte de charge au niveau de l'accélérateur en équi-pression 18 augmente avec le débit. Si une obstruction de l'accélérateur se produit, le débit de poudre devient très faible ou nul. Il en résulte une baisse sensible de la pression dans l'enceinte, détectée par le manomètre 77.

Sur la figure 3, on a représenté une variante de réalisation des moyens de transfert 114 servant à transférer la poudre depuis le réservoir de stockage jusqu'au bol vibrant servant au dosage de celle-ci. Ce mode de realisation est particulièrement adapté au cas où les poudres contenues dans le réservoir sont particulièrement fluides. Dans ce cas, on comprend en effet qu'un écoulement de la poudre vers le bol vibrant pourrait se produire même après arrêt de la vis d'Archimède.

Comme le montre la figure 3, la vis d'Archimède 132 est alors pourvue, à son extrémité inférieure, d'un clapet 180 obturant normalement l'extrémité inférieure du passage 136 traversant le fond du réservoir de stockage. Afin de permettre l'ouverture et la fermeture du passage, il est donc nécessaire de rendre la vis 132 mobile selon son axe. Cela est réalisé au moyen d'un moteur 182 ayant pour effet de déplacer la vis d'Archimède 132 vers le bas (flèche $F_1$ sur la figure 3), dégageant ainsi le clapet 180 du passage 136.

La mise en rotation de la vis d'Archimède selon la flèche $F_2$ est commandée par un moteur 138 au travers de pignons 184 et 186. Le pignon 186 est claveté sur une tige 187 prolongeant la vis d'Archimède et maintenu en position fixe malgré les déplacements de celle-ci selon la flèche $F_1$, sous l'effet d'un ressort 188.

Dans cette variante de réalisation de la figure 3, les moteurs 138 et 182 sont commandés simultanément à partir du ou des capteurs de niveau de la poudre dans le bol vibrant.

Dans une autre variante non représentée, proche de la variante de la figure 3, la vis d'Archimède 132 pourrait être supprimée et remplacée par des éléments racleurs tels que des ergots, montés sur une tige animée d'un mouvement de va et vient permettant à la fois de contrôler au moyen du clapet le transfert de la poudre dans le bol vibrant et d'éviter au moyen des éléments racleurs la formation de voûtes dans le réservoir de stockage.

Grâce au dispositif qui vient d'être décrit en se référant aux figures 1 à 3, il est possible en réalisant un minimum de réglages d'adapter le distributeur aux caractéristiques de la poudre et aux caractéristiques de l'appareil d'utilisation. En particulier, le débit du distributeur peut être réglé à volonté en agissant sur l'alimentation 59 du générateur de vibration 54. Parallèlement, il est possible en réglant le débit de gaz porteur admis dans l'enceinte de contrôler à volonté le transport de la poudre vers l'appareil d'utilisation. Accessoirement, on peut également régler en agissant sur le ou les capteurs de niveau dans le bol vibrant 12 le transfert de la poudre dans celui-ci. Enfin, on a vu qu'un réglage de l'accélérateur 16 est également possible.

Bien entendu, le distributeur de poudre qui vient d'être décrit peut subir un certain nombre de modifications et de perfectionnements sans sortir du cadre de l'invention. En particulier, le réservoir de stockage 10 peut être muni pour certaines applications de moyens de préchauffage d'un quelconque type connu, tels que des moyens de chauffage électrique disposés à l'intérieur de la virole 20 et/ou dans le couvercle 22.

On peut aussi envisager de munir un même distributeur de poudre de plusieurs réservoirs de stockage contenant des poudres de natures différentes, afin d'en réaliser à la fois le mélange et le dosage dans le bol vibrant.

**Revendications**

1. Distributeur de poudre comprenant au moins un réservoir (10) de stockage de la poudre (28) à distribuer, une enceinte étanche (19) contenant des moyens de dosage (12) de la poudre, des moyens de transfert mécanique (14) de la poudre du réservoir (10) dans l'enceinte étanche (19), au moins un capteur (58a, 58b) de niveau de poudre dans cette enceinte, délivrant des signaux contrôlant l'actionnement des moyens de transfert mécanigne (14), et des moyens de transport de la poudre par gaz porteur, comportant des moyens (65, 64) pour introduire un gaz porteur sous pression dans l'enceinte étanche (19) et un conduit de transport (16) de la poudre dosée vers un appareil d'utilisation, ce distributeur étant caractérisé en ce que le réservoir de stockage (10) est étanche, les moyens de dosage (12) comprenant un bol vibrant (12) disposé dans l'enceinte étanche (19) et présentant un orifice de sortie (50) communiquant avec le conduit de transport (16), les moyens de transport de la poudre comprenant de plus des moyens (30) pour introduire le gaz porteur sous pression dans le réservoir (10), et un accélérateur en équi-pression (18) disposé dans le conduit de transport (16), cet accélérateur comportant une zone convergente (68) suivie d'une zone divergente (72), ces deux zones étant séparées par un passage annulaire (74) communiquant avec l'intérieur de l'enceinte étanche (19) et dont la section diminue radialement vers l'intérieur.

2. Distributeur de poudre selon la revendication 1, caractérisé en ce que le réservoir de stockage (10) comporte à son extrémité inférieure une trémie conique (26) disposée au-dessus du bol vibrant (12), les moyens de transfert mécanique (14) de la poudre comprenant une vis d'Archimède (32) disposée selon une génératrice de la trémie conique dans le fond de cette dernière et dans un passage (36) débouchant au-dessus du bol vibrant.

3. Distributeur de poudre selon la revendication 1, caractérisé en ce que le réservoir de stockage comporte à son extrémité inférieure une trémie conique disposée au-dessus du bol vibrant, les moyens de transfert mécanique (14) de la poudre contenant un clapet (180) disposé dans un passage (136) communiquant avec le fond de la trémie et débouchant au-dessus du bol vibrant, et une pièce (132) mobile disposée dans le fond de la trémie selon une génératrice de celle-ci.

4. Distributeur de poudre selon l'une quelconque des revendications 1 à 3, caractérisé en ce que l'accélérateur en équi-pression (18) comprend au moins deux pièces (66, 70) entre lesquelles est formé le passage annulaire (74) et portant chacune l'une desdites zones convergente (68) et divergente (72), et des moyens pour déplacer ces pièces l'une par rapport à l'autre selon l'axe du conduit de transport (16), afin de régler la largeur dudit passage annulaire.

5. Distributeur de poudre selon l'une quelconque des revendications précédentes, caractérisé en ce que le bol vibrant (12) comprend un fond (44) dont la profondeur augmente du centre vers la périphérie et une rainure en spirale (48) reliant le fond du bol à l'orifice de sortie, de telle sorte que son extrémité interne se trouve au niveau de la périphérie du fond du bol et qu'elle s'élève régulièrement jusqu'à l'orifice de sortie (50).

6. Distributeur de poudre selon l'une quelconque des revendications précédentes, caractérisé en ce que le bol vibrant (12) est actionné par un générateur de vibrations (54) disposé en-dessous du bol et reposant sur le fond de l'enceinte étanche (19), des moyens (59) étant prévus pour regler le régime dudit générateur.

7. Distributeur de poudre selon la revendication 6, caractérisé en ce que le bol vibrant (12) porte un accéléromètre (57) délivrant des signaux représentatifs du poids de poudre débitée par le bol vibrant, ces signaux servant à agir sur lesdits moyens (59) de réglage du régime du générateur de vibrations (54).

8. Distributeur de poudre selon l'une quelconque des revendications précédentes, caractérisé en ce qu'un soufflet (55) perméable aux gaz et imperméable aux poudres relie la périphérie du bol vibrant (12) aux parois de l'enceinte étanche (19).

9. Distributeur de poudre selon l'une quelconque des revendications précédentes, caractérisé en ce qu'il comprend deux capteurs de niveau capacitifs (58a, 58b) définissant les niveaux minimum et maximum de poudre dans le bol vibrant, et des moyens de commutation (62) commandant la mise en oeuvre des moyens de transfert mécanique (14) lorsque le niveau de poudre dans le bol vibrant est compris entre lesdits niveaux minimum et maximum, et leur arrêt dans le cas contraire.

10. Distributeur de poudre selon la revendication 9, caractérisé en ce que les niveaux minimum et maximum définis par les capteurs (58a, 58b) sont réglables.

11. Distributeur de poudre selon l'une quelconque des revendications précédentes, caractérisé en ce que les moyens pour introduire un gaz porteur dans le réservoir et dans l'enceinte étanche comprennent des moyens (64, 65) pour introduire le gaz porteur dans l'enceinte étanche (19) et au moins un tube (30) reliant cette dernière à l'extrémité supérieure du réservoir de stockage (10).

12. Distributeur de poudre selon l'une quelconque des revendications précédentes, caractérisé en ce que les moyens (65) pour introduire un gaz porteur dans le réservoir et dans l'enceinte étanche permettent d'introduire le gaz à un débit constant réglable.

13. Distributeur de poudre selon l'une quelconque des revendications précédentes, caractérisé en ce qu'il comprend de plus des moyens de préchauffage de la poudre dans le réservoir de stockage (10).

14. Distributeur de poudre selon l'une quelconque des revendications précédentes, caractérisé en ce qu'il comprend de plus des moyens (77) de mesure de la pression régnant dans l'enceinte étanche (19).

**Claims**

1. Powder dispenser comprising at least one reservoir (10) for storing the powder (28) which is to be dispensed, a leaktight vessel (19) containing powder metering means (12), means (14) for the mechanical transfer of the powder from the reservoir (10) to the leaktight vessel (19), at least one sensor (58a, 58b) sensing the powder level in said vessel and supplying signals controlling the action of the mechanical transfer means (14), and means for conveying the powder with the aid of a carrier gas, comprising means (65, 64) for introducing a pressurized carrier gas into the leaktight vessel (19) and a duct (16) for conveying the metered powder to a utilizing apparatus, said dispenser being characterized in that the storage reservoir (10) is leaktight, the metering means (12) comprising a vibrating bowl (12) disposed in the leaktight vessel (19) and having an output aperture (50) in communication with the conveying duct (16), the powder conveying means comprising in addition means (30) for introducing the pressurized carrier gas into the reservoir (10), and an equipressure accelerator (18) disposed in the conveying duct (16), said accelerator comprising a convergent zone (68) followed by a divergent zone (72), these two zones being separated by an annular passage (74) communicating with the interior of the leaktight vessel and having a section decreasing radically in the inward direction.

2. Powder dispenser according to Claim 1, characterized in that the storage reservoir (10) is provided at its bottom end with a conical hopper (26) disposed above the vibrating bowl (12), the mechanical transfer means (14) for the powder comprising an Archimedean screw (32) disposed along a generatrix of the conical hopper in the bottom of the latter and in a passage (36) whose outlet lies above the vibrating bowl.

3. Powder dispenser according to Claim 1, characterized in that the storage reservoir is provided at its bottom end with a conical hopper disposed above the vibrating bowl, the mechanical transfer means (114) for the powder containing a valve (180) disposed in a passage (136) communicating with the bottom of the hopper and having its outlet disposed above the vibrating bowl, and a movable member (132) disposed in the bottom of the hopper along a generatrix of the latter.

4. Powder dispenser according to any one of Claims 1 to 3, characterized in that the equipressure accelerator (18) comprises at least two members (66, 70) between which is formed the annular passage (74) and each of which carries one of said convergent (68) and divergent (72) zones, and means for displacing said members in relation to one another along the axis of the conveying duct (16) for the purpose of adjusting the width of said annular passage.

5. Powder dispenser according to any one of the preceding claims, characterized in that the vibrating bowl (12) has a bottom (44) the depth of which increases from the centre towards the periphery and a spiral groove (48) connecting the bottom of the bowl to the outlet aperture, in such a manner that its inner end is situated at the level of the periphery of the bottom of the bowl and that it rises regularly to the outlet aperture (50).

6. Powder dispenser according to any one of the preceding claims, characterized in that the vibrating bowl (12) is operated by a vibration generator (54) disposed beneath the bowl and resting on the bottom of the leaktight vessel (19), means (59) being provided to adjust the operating conditions of said generator.

7. Powder dispenser according to Claim 6, characterized in that the vibrating bowl (12) carries an accelerometer (57) supplying signals representing the weight of powder dispensed by the vibrating bowl, these signals serving to act on said means (59) adjusting the operating conditions of the vibration generator (54).

8. Powder dispenser according to any one of the preceding claims, characterized in that a bellows (55) permeable to gases and impermeable to powders connects the periphery of the vibrating bowl (12) to the walls of the leaktight vessel (19).

9. Powder dispenser according to any one of the preceding claims, characterized in that it includes two capacitive level sensors (58a, 58b) defining the minimum and maximum levels of powder in the vibrating bowl, and communication means (62) controlling the putting into operation of the mechanical transfer means (14) when the level of powder in the vibrating bowl is between said minimum and maximum levels and the stopping of said means in the contrary case.

10. Powder dispenser according to Claim 9, characterized in that the minimum and maximum levels defined by the sensors (58a, 58b) are adjustable.

11. Powder dispenser according to any one of the preceding claims, characterized in that the means for introducing a carrier gas into the reservoir and into the leaktight vessel comprise means (64, 65) for introducing the carrier gas into the leaktight vessel (19) and at least one tube (30) connecting the latter to the top end of the storage reservoir (10).

12. Powder dispenser according to any one of the preceding claims, characterized in that the means (65) for introducing a carrier gas into the reservoir and into the leaktight vessel enable the gas to be introduced with a constant, adjustable rate of flow.

13. Powder dispenser according to any one of the preceding claims, characterized in that it also includes means for preheating the powder in the storage reservoir (10).

14. Powder dispenser according to any one of the preceding claims, characterized in that it also includes means (77) for measuring the pressure prevailing in the leaktight vessel (19).

**Patentansprüche**

1. Pulverspender, enthaltend wenigstens einen Vorratsbehälter (10) für abzugebendes Pulver (28), ein abgeschlossenes Gehäuse (19), das eine Dosiervorrichtung (12) für das Pulver enthält, eine mechanische übertragungseinrichtung (14) für das Pulver vom Vorratsbehälter (10) in das abgeschlossene Gehäuse (19), wenigstens eine Sonde (58a, 58b) für das Pulverniveau in diesem Gehäuse, das Signale liefert, die die Tätigkeit der mechanischen übertragungseinrichtung (14) steuern, und eine Transporteinrichtung für das Pulver durch ein Trägergas, enthaltend eine Einrichtung (65, 64) zum Zuführen eines Trägergases in das abgeschlossene Gehäuse (19) und eine Leitung (16) zum Transport des dosierten Pulvers zu einer Verwendungsvorrichtung, dadurch gekennzeichnet, daß der Vorratsbehälter (10) dicht ist, die Dosiereinrichtung (12) einen vibrierenden Behälter (12) aufweist, der in dem abgeschlossenen Gehäuse (19) angeordnet ist und eine Austrittsöffnung (50) aufweist, die mit der Transportleitung (16) in Verbindung steht, die Transporteinrichtung für das Pulver darüber hinaus eine Einrichtung (30) zum Einleiten des Trägergases in den Vorratsbehälter (10) aufweist, und einen druckgleichen Beschleuniger (18), der in der Transportleitung (16) angeordnet ist und eine Konvergenzzone (68) aufweist, die von einer Divergenzzone (72) gefolgt wird, wobei die zwei Zonen voneinander durch eine ringförmige Leitung (74) getrennt sind, die mit dem Innenraum des abgeschlossenen Behälters (19) verbunden ist und deren Querschnitt in radialer Richtung gegen den Innenraum abnimmt.

2. Pulverspender nach Anspruch 1, dadurch gekennzeichnet, daß der Vorratsbehälter (10) an seinem unteren Ende einen konischen Trichter (26) aufweist, der über dem vibrierenden Behälter (12) angeordnet ist, wobei die mechanische übertragungseinrichtung (14) für das Pulver eine archimedische Schraube (32) enthält, die längs einer Erzeugenden des konischen Trichters im Boden des letzteren und in einer Leitung (36) angeordnet ist, die oberhalb des vibrierenden Behälters mündet.

3. Pulverspender nach Anspruch 1, dadurch gekennzeichnet, daß der Vorratsbehälter an seinem unteren Ende einen konischen Trichter aufweist, der oberhalb des vibrierenden Behälters angeordnet ist, wobei die mechanische übertragungseinrichtung (114) für das Pulver enthält: ein Klappenventil (180), das in einer Leitung (136) angeordnet ist, die mit dem Boden des Trichters verbunden ist und oberhalb des vibrierenden Behälters mündet, sowie ein bewegliches Element (132), das im Boden des Trichters längs einer Erzeugenden desselben angeordnet ist.

4. Pulverspender nach einem der Ansprüche 1 bis 3, dadurch gekennzeichnet, daß der druckgleiche Beschleuniger (18) enthält: wenigstens zwei Elemente (66, 70), zwischen denen die ringförmige Leitung (74) ausgebildet ist und die jeweils eine der konvergenten und divergenten Zonen (68, 72) tragen, sowie Einrichtunge zum Verschieben dieser Elemente gegeneinander längs der Achse der Transportleitung (16), um die Weite der genannten ringförmigen Leitung zu regeln.

5. Pulverspender nach einem der vorhergehenden Ansprüche, dadurch gekennzeichnet, daß der vibrierende Behälter (12) einen Boden (44), dessen Tiefe von der Mitte gegen den Rand zunimmt, und eine spiralförmige Rille (48) aufweist, die den Boden des Behälters mit der Ausgangsöffnung derart verbindet, daß ihr inneres Ende sich in Höhe des Randes des Behälterbodens befindet und gleichmäßig bis zur Ausgangsöffnung (50) ansteigt.

6. Pulverspender nach einem der vorhergehenden Ansprüche, dadurch gekennzeichnet, daß der vibrierende Behälter von einem Vibrationsgenerator (54) erregt wird, der unterhalb des Behälters angeordnet ist und auf dem Boden des abgeschlossenen Gehäuses (19) ruht, wobei Einrichtungen (59) vorgesehen sind, um die Wirkung dieses Generators zu regeln.

7. Pulverspender nach Anspruch 6, dadurch gekennzeichnet, daß der vibrierende Behälter (12) einen Beschleunigungsmesser (57) trägt, der Signale liefert, die für das Gewicht des von dem vibrierenden Behälter abgegebenen Pulvers repräsentativ sind und dazu dienen, auf die genannte Einrichtung (59) zur Regelung der Wirkung des Vibrationsgenerators (54) einzuwirken.

8. Pulverspender nach einem der vorhergehenden Ansprüche, dadurch gekennzeichnet, daß ein Balg (55), der für Gas permeabel und für die Pulver impermeabel ist, den Rand des vibrierenden Behälters (12) mit den Wänden des abgeschlossenen Gehäuses (19) verbindet.

9. Pulverspender nach einem der vorhergehenden Ansprüche, dadurch gekennzeichnet, daß er zwei kapazitive Niveausonden (58a, 58b) enthält, die minimale und maximale Pulverniveaus in dem vibrierenden Behälter definieren, und daß er Schalteinrichtungen (62) enthält, die die Inbetriebsetzung der mechanischen Übertragungseinrichtung (14) steuern, wenn das Pulverniveau in dem vibrierenden Behälter zwischen den genannten minimalen und maximalen Niveaus liegt und ihre Abschaltung im entgegengesetzten Falle steuern.

10. Pulverspender nach Anspruch 9, dadurch gekennzeichnet, daß die von den Sonden (58a, 58b) definierten minimalen und maximalen Niveaus einstellbar sind.

11. Pulverspender nach einem der vorhergehenden Ansprüche, dadurch gekennzeichnet, daß die Einrichtung zum Einleiten eines Trägergases in den Vorratsbehälter und in das abgeschlossene Gehäuse umfaßt: eine Einrichtung (64, 65) zum Einleiten des Trägergases in das abgeschlossene Gehäuse (19) und wenigstens ein Rohr (30), das letzteres mit dem oberen Ende des Vorratsbehälters (10) verbindet.

12. Pulverspender nach einem der vorhergehenden Ansprüche, dadurch gekennzeichnet, daß die Einrichtung (65) zum Einleiten eines Trägergases in den Vorratsbehälter und in das abgeschlossene Gehäuse die Einleitung des Gases mit einstellbarer, konstanter Liefermenge gestattet.

13. Pulverspender nach einem der vorhergehenden Ansprüche, dadurch gekennzeichnet, daß er darüber hinaus eine Vorheizeinrichtung für das Pulver in dem Vorratsbehälter (10) aufweist.

14. Pulverspender nach einem der vorhergehenden Ansprüche, dadurch gekennzeichnet, daß er darüber hinaus eine Meßeinrichtung (44) für den Druck, der in dem abgeschlossenen Gehäuse (19) herrscht, enthält.

FIG.1

0 123 581

# FIG.2

50

66
68
74
18 →
70
72
76

# FIG.3

182

188
186
187
184
138

F1
F2

114

132

136

180